# EUROPEAN PATENT APPLICATION

(11) **EP 1 746 043 A1**
(43) Date of publication of application: **24.01.2007**
(21) Application number: 05291526.1
(22) Date of filing: 18.07.2005
(51) Int. Cl.: B65D 65/40, B65D 75/58, B32B 7/06

(54) **Easy-open package made of two-or-more ply laminate including adhesive-free lines**

(71) Applicant: MARS, INCORPORATED, McLean, Virginia 22101-3883 (US)
(72) Inventor: Mathis, Frédéric, 57370 Phalsbourg (FR); Lozach, Jean, 67000 Strasbourg (FR); Chantereau, Régis, 67610 La Wantzenau (FR)
(74) Representative: Hirsch & Associés

(57) **Abstract**

The package comprises at least one wall of laminate having two plies bonded together by an adhesive wherein at least one adhesive-free line is arranged between said two plies. This adhesive-free line(s) provide an easy-open feature. The package may be a bag or a pouch having two main walls comprising each one or more adhesive-free lines (17, 18) arranged in correspondence to each others.

## Description

### FIELD OF THE INVENTION

The invention relates to an easy-open package as well as to a laminate for making such an easy-open package and a method for manufacturing such a laminate.

### BACKGROUND OF THE INVENTION

Packages, in particular bags and pouches, always raise the issue of making it possible to open them easily, preferably without tools along a predictable line of failure so as to prevent the package tearing in undesired directions, e.g. down to the body of the bag or pouch resulting in accidental spillage of the content. This issue is well known in the field of food packaging. Several techniques have been used to provide packages with an easy-open feature.

As packages are very often made of flexible multi-ply film laminates, a common technique consists in forming a line of weakness in the film laminate by slitting or thinning one or several layers of the laminate without perforating the whole film when some airtighteness is required.

Such slitting or thinning can be made before lamination of the film laminate or after lamination of the film laminate by means of mechanical cutting, laser or ultrasound such as disclosed in EP-A-0 468 619, EP-A-0 596 747, FR-A-2 728 242, JP-A-61-242781, JP-A-7-285559, US-A-3,212,381, US-A-3,812,002, US-A-3,909,582, US-A-5,000,321, US-A-5,001,325, US-A-5,158,499, US-A-5,202,065, US-A-5,630,308, US-A-5,229,180, US-A-2002/81405, WO-A- 98/29312 and WO 2004/000532.

US-A-3,069,066 discloses a bag closure made of a sheet having perforated lines and with a coating of adhesive material on one side of said sheet with two space-apart zones of light intensity adhesive so as to face each other upon folding the sheet about the mouth of a bag.

Another technique disclosed in US-A-4,986,673 consists in providing a reinforced tab region adjacent to a tear region comprising a gap portion where the front and back panels are not secured or adhered to one another.

Another technique disclosed in US-A-4,902,142 and US-A-5,000,321 consists in perforating the whole film laminate along a line and covering it with a removable strip for providing airtighteness.

US-A-5,689,935 and US-A-5,829,227 disclose a further technique in which the seal of the package provides a predictable line of failure by using a specific coextruded inner sealant film. US-A-5,184,771 discloses a further technique making use of a multi-ply film laminate in which the bonding of two plies is less strong than the bonding between adjacent plies, a tear-open region being provided between notchings.

Further documents dealing with easy-open techniques can be mentioned such as US-A-1,013,783, US-A-4,986,673, US-A-5,217,307, US-A-5,552,202, US-A-6,129,389, US-B-6,213,642 and US-B-6,440,508.

However, all these techniques are quite complicated and expensive or result in mechanical drawbacks such as risk of delaminating of the film laminate in the region of slitting or unevenness of the film in this region e.g. when mechanically cutting slits in a layer before lamination.

A further technique disclosed in US-A-4,522,854 consists in providing two weakness lines during the extrusion of a single-ply film. However, single-ply films are not always suitable for making packages. Further, it results in an increased thickness of the film in the form of a bead between the two weakness lines which has the drawback of preventing the tear continuing from one weakness line to the other after leaving the first and so rather causes the tear to go in a direction opposite to the other weakness line.

### SUMMARY OF THE INVENTION

The aim of the present invention is to alleviate at least partly the above mentioned drawbacks.

This aim is achieved with a package comprising at least one wall of laminate, said laminate comprising two plies bonded together by an adhesive wherein at least one adhesive-free line is arranged between said two plies.

Preferred embodiments comprises one or more of the following features:
- said at least one adhesive-free line extends from a first edge of the package;
- the package further comprises a seal arranged on said film along said first edge of the package and a notch arranged in said seal wherein said at least one adhesive-free line extends substantially from said notch;
- said at least one adhesive-free line extends from a first edge of the package to a second edge of the package;
- said at least one adhesive-free line is rectilinear;
- said at least one adhesive-free line has a width ranging from 1.5 to 5 mm and more preferably from 2 to 4 mm;
- the number of lines of said at least one adhesive-free lines is at least two and said at least two adhesive-free lines are parallel and spaced apart by a distance not greater than 10 mm and more preferably ranging from 3 to 5 mm;
- the package further comprises a seal arranged on said laminate along said first edge of the package and a notch arranged in said seal wherein said notch is located on said first edge at a level comprised between said at least two adhesive free lines.
- at least one of said plies is made of a plastic material and more preferably each of said plies is made of a plastic material;
- one of said two plies is made of PE, the thickness of said PE ply preferably ranging from 20 to 90 microns and more preferably from 50 to 80 microns;
- one of said two plies is made of OPP, the thickness of said OPP ply preferably ranging from 15 to 70 microns and more preferably from 15 to 30 microns;
- the number of walls of said at least one wall of laminate is at least two, two of said at least two walls of laminate form two main walls of a bag and said at least one adhesive-free line in each of said two walls being arranged so as to substantially face each other;
- said laminate is flexible.

According to another aspect, the invention relates to a laminate suitable for making packages, comprising two plies bonded together by an adhesive wherein at least one adhesive-free line is arranged between said two plies.

Preferred embodiments of the laminate comprises one or more of the following features:
- said at least one adhesive-free line is rectilinear;
- said at least one adhesive-free line has a width ranging from 0.5 to 5 mm, more preferably from 2 to 4 mm;
- the number of lines of said at least one adhesive-free lines is at least two and said at least two adhesive-free lines are parallel and spaced apart by a distance not greater than 10 mm and more preferably ranging from 3 to 5 mm;
- at least one of said plies is made of a plastic material and more preferably each of said plies is made of a plastic material;
- one of said two plies is made of PE, the thickness of said PE ply preferably ranging from 20 to 90 microns and more preferably from 50 to 80 microns;
- one of said two plies is made of OPP, the thickness of said OPP ply preferably ranging from 15 to 70 microns and more preferably from 15 to 30 microns;
- said at least one adhesive-free line is arranged parallel to a longitudinal edge of the laminate and extends over a whole length of the laminate;
- the laminate has identical printing regularly repeated over the length of the laminate, each printing corresponding to a package or a set of packages;
- the laminate comprises at least two sets of said at least one adhesive-free line wherein said two sets of at least one adhesive-free line are parallel and spaced apart by a distance of at least 20 mm, the laminate being intended to form two main walls of packages with each main wall comprising a respective one of said two sets of at least one adhesive-free so as to substantially face each other when the two main walls of the packages are joint together by their edges;
- the laminate is flexible.

According to another aspect, the invention relates to a method of manufacturing a laminate according to the invention, comprising the steps of:
- passing a first web of material in a roll assembly comprising a gravure roll for applying an adhesive on said first web; and
- laminating together said first web and a second web of material;
wherein the gravure roll is engraved for preventing application of adhesive on said first web along at least one line arranged on the surface of the gravure roll.

Further features and advantages of the invention will appear from the following description of embodiments of the invention, given as non-limiting example, with reference to the accompanying drawings listed hereunder.

### BRIEF DESCRIPTION OF THE DRAWINGS

Fig. 1 shows a pouch according to the invention before opening.
Fig. 2 shows the pouch of Fig. 1 after having initiated tearing along its line of weakness.
Fig. 3 shows a section through the film laminate used to make the main walls of the pouch of Fig. 1.
Fig. 4 shows a web portion of film laminate for manufacturing pouches of the type of Fig. 1.
Fig. 5 illustrates a manufacturing unit for the web of Fig. 4.
Fig. 6 shows schematically a top view of a gravure roll used in the manufacturing unit of Fig. 5.
Fig. 7 shows a section through an alternative film laminate used to make the main walls of the pouch of Fig. 1.

### DETAILED DESCRIPTION OF PREFERRED EMBODIMENTS

The package has at least one wall of laminate which comprises two plies of material bonded together by an adhesive. The laminate is preferably flexible, but not necessarily so. An easy-open feature is provided for the package by at least one adhesive-free line arranged between the two plies of the laminate. The adhesive between the two plies provides mechanical strength in addition to the respective strength of each ply. Thus, the presence of the adhesive-free line results in a weakness line for the laminate which provides a line of preferential tearing for the package. When a user tears the package in the region of an adhesive-free line, the tear will tend to follow the adhesive-free line.

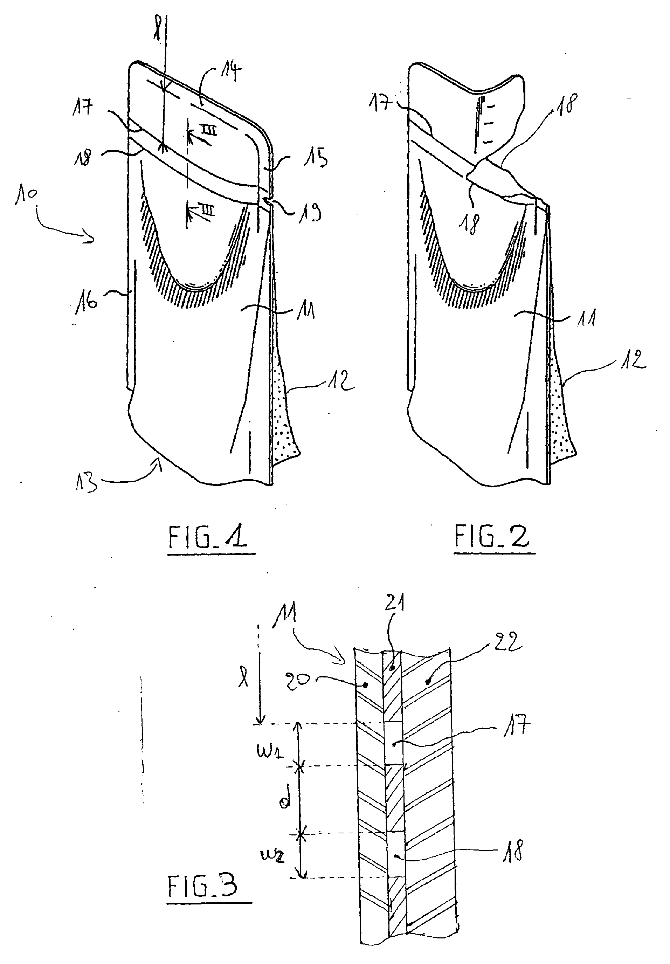

A pouch according to the invention will be described in more detail in reference to Fig. 1 and 2. Pouch 10 comprises two main walls 11, 12 joined along their edges. In the illustrated embodiment, pouch 10 is of the so-called Doypack® type. Pouch 10 has a gusset part - not visible - arranged between main walls 11, 12 in the bottom region 13 thereof. This gusset part makes it possible for pouch 10 to stand upright. The lateral edges 15, 16 and the top edge 14 of main walls 11, 12 are sealed together.

Pouch 10 comprises two lines of preferential tearing 17, 18 in each main wall 11, 12 in the top region of pouch 10. The two lines 17, 18 are rectilinear and extend parallel to each other from lateral edge 15 to lateral edge 16. Lines 17, 18 in main wall 11 are substantially aligned with lines 17, 18 in main wall 12 so as to ensure that the tearing will follow one of these lines in each main wall during the opening operations. Optionally, a notch 19 is arranged in lateral seal 15 at a level comprised between lines 17, 18. Notch 19 helps the user to initiate the tearing through lateral seal 15.

Opening operations typically consist in a user pulling the top of pouch 10 with the fingers of one hand while holding pouch 10 with the other hand so as to initiate the tearing at notch 19. Once initiated, the tearing follows one of lines 17, 18 on each main wall 11, 12 up to lateral edge 16 where the top part of pouch 10 is removed from the remainder of pouch 10. Fig. 2 shows pouch 10 in a partially opened state.

Lines 17, 18 are preferably located at a level above the product fill level of pouch 10 to avoid spilling after opening. Lines 17, 18 are located somewhat below the top seal, preferably at a distance "1" not greater than 20 mm, more preferably 15 mm from the top seal.

Main walls 11, 12 are made from a same film laminate and lines of preferential tearing 17, 18 are identically featured in both main walls 11, 12. The film laminate and the lines of preferential tearing 17, 18 will be described in more detail in relation to Fig. 3.

Fig. 3 shows schematically an enlarged view of a cut through main wall 11 in the region of lines 17, 18 according to line III-III in Fig. 1 perpendicular to lines 17, 18. Main wall I 1 is made of a two-ply film laminate of the OPP/PE type, the first ply 20 being the OPP film layer and the second ply 22 being the PE film layer. Film layers 20 and 22 are bonded together by means of an adhesive 21.

For pouch 10, OPP layer 20 is the external face of main wall 11 while PE layer 22 is the internal face. OPP layer 20 may be transparent and provided with reverse printing on its surface coated with adhesive 20. The printing is thereby protected by OPP layer 20 during manipulation of pouch 10. PE layer 22 provides for the sealing ability for sealing main walls 11, 12 together and on bottom gusset part. OPP layer 20 of the bottom gusset part provides also for the sealing ability of the lateral edges of the folded bottom gusset part on itself

OPP layer 20 has preferably a thickness ranging from 15 to 70 microns, more advantageously from 15 to 30 microns. PE layer 22 has preferably a thickness ranging from 20 to 90 microns, more advantageously from 50 to 80 microns. Typically, OPP layer 20 has a thickness of 20 microns and PE layer 22 has a thickness of 70 microns.

Each line of preferential tearing 17, 18 is provided by leaving a line between film layers 20 and 22 free of adhesive. Where no line of preferential tearing is to be provided, the surface of film layers 20 and 22 is preferably fully coated with adhesive 21. So, film layers 20, 22 are bonded together in all locations except along lines 17 and 18. The two adhesive-free lines 17, 18 each provide a weakness line in the film thereby providing the lines of preferential tearing for pouch 10.

Adhesive 21 may be of any appropriate type conventionally used in the art. In particular, it may be a one- or a two-component adhesive which can be solventless, solvent based or water based. It can be a hot melt type or for cold lamination. As an example, adhesive 21 is a two component isocyanate which advantageously does not require a drying tunnel. The amount of adhesive layer 21 in the laminate preferably ranges from 1 to 3 g/m².

The width "w1", respectively "w2" of adhesive-free line 17, respectively 18 is preferably at least 0.5 mm, more preferably at least 1 mm, even more preferably at least 1.5 mm and more advantageously at least 2 mm in order to provide good guidance for the tearing. It is preferable that widths "w1" and "w2" are each not greater than 5 mm, more advantageously 4 mm so as to avoid visual impact on pouch 10 such as clear parts or laminate deformation.

The distance "d" between lines 17, 18 is preferably not greater than 10 mm, more advantageously 5 mm so that the tear quickly meets the other line and follows it should it depart from one line during the pouch opening operations. Distance "d" is preferably at least 3 mm so as to ensure enough bonding is provided by adhesive 21 between lines 17, 18 and also to ensure that notch 19 is located between the opposite longitudinal edges of lines 17, 18, more preferably between the adjacent longitudinal edges of lines 17, 18 despite the machine tolerance for positioning notch 19 on lateral seal 15.

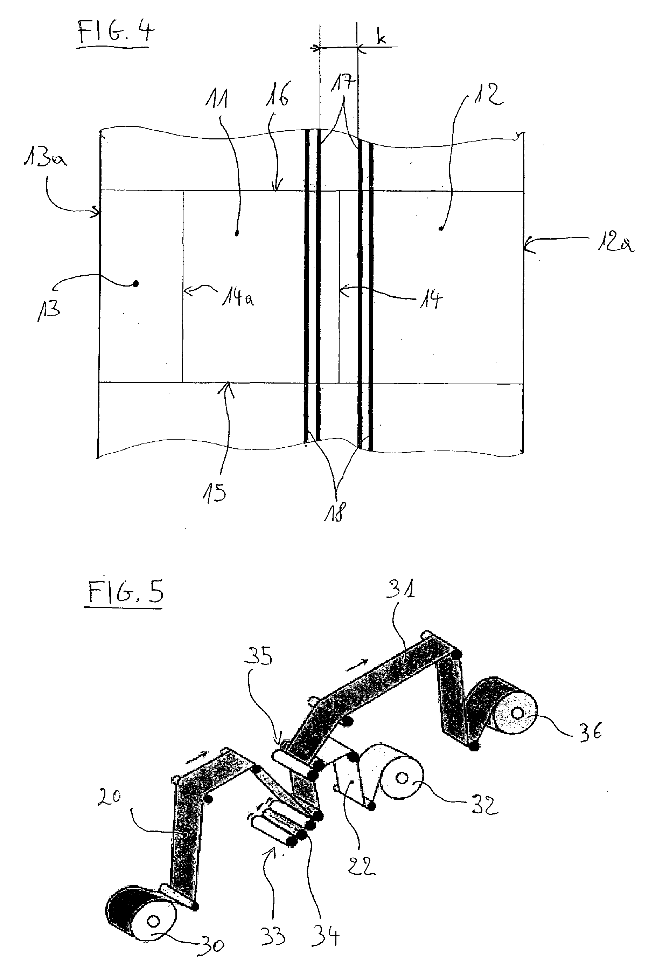

Manufacture of such pouches 10 can take place in any conventional manner e.g. starting out from a long web of film laminate by means of folding, sealing and cutting operations. The web may exhibit an identical printing regularly repeated over its whole length wherein each printing corresponds to a package or a set of packages for providing it e.g. with its commercial presentation and markings. A longitudinal portion of such a web is shown in Fig. 4. The shown portion corresponds to one pouch 10, but in the unfolded state where the regions corresponding to main walls 11, 12 and bottom gusset part 13 of pouch 10 are imaginarily shown for the sake of clarity. The two pairs of adhesive-free lines 17, 18 extend continuously along the whole length of the web. The distance "k" between the two lines 17 is preferably at least 20 mm so as to provide enough place above lines 17 for sealing an/or grasping for the opening operations of pouch 10. Pouches 10 are usually obtained in a continuous process while the web runs. First, the web is folded along line 14 between main walls 11, 12 and along line 14a between main wall 11 and bottom part 13 and then sealed along line 14 and along line 14a thereby providing the top seal and one bottom seal of the pouches. The web is then applied around a cylindrical tube so that edge regions 12a and 13a get superimposed and edge regions 12a, 13a are sealed together. As a result, the web forms a tube. Further, bottom part 13 is folded to form the gusset e.g. with a finger and main walls 11, 12 are sealed together and on bottom gusset part 13a along line 15. The pouch gets then filed with its content by the open lateral side corresponding to edge 16. When filled, the tube is sealed and cut along line 16, thereby providing a finished pouch 10. Optionally, a hole - usually called Eurohole - for making it possible to hang the finished pouch 10 on a rod in retail outlets is arranged in the top seal.

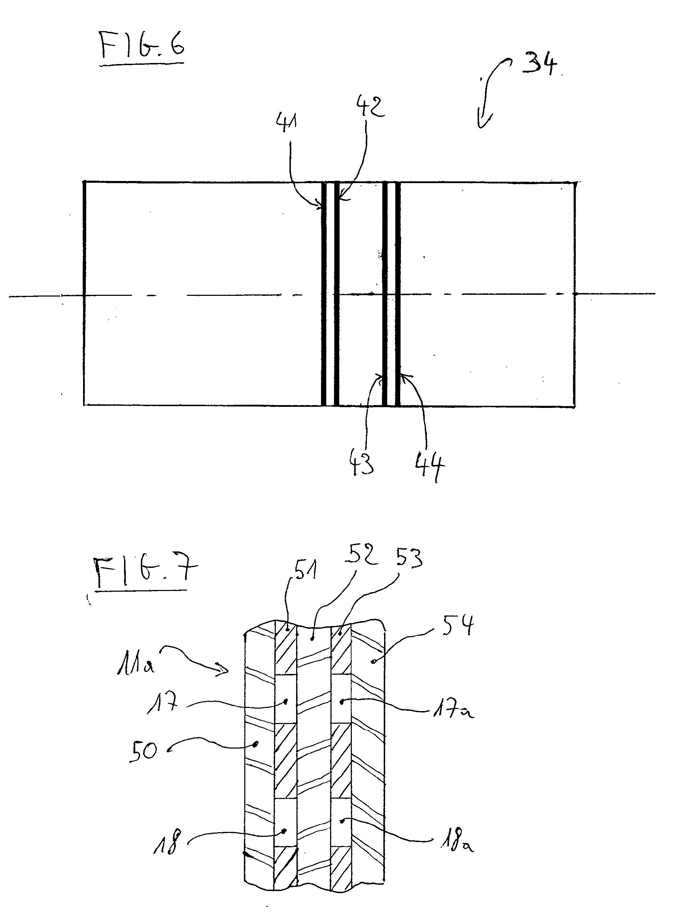

Fig. 5 illustrates a manufacturing unit for the web of film laminate of Fig. 4. OPP film 20 is provided on a first reel 30 while PE film 22 is provided on a second reel 32. Both films 20, 22 are unwound from their respective reel 30, 32 and pass together between a lamination nip 35 for bonding together films 20, 22. After lamination, the film laminate is wound on a third reel 36. Before passing through lamination nip 35, one of the films - here OPP layer 20 - is previously coated with adhesive by gravure coating in a gravure roll assembly 33. The reverse printing of OPP film 20 takes place in known way between reel 30 and gravure roll assembly 33. Alternatively, OPP film 20 is reverse printed on a separate print press before being wound on reel 30.

Gravure coating is well known in the art. Typically, it involves a gravure roll assembly comprising a rotating gravure roll - referenced 34 in Fig. 5 - having a part of its circumference in contact with a coating liquid - i.e. the adhesive in our case - contained in a longitudinal container. A doctor blade acts as a seal for the container and removes the excess of liquid coating on the gravure roll. The container comprises one longitudinal doctor blade extending from a longitudinal edge thereof and contacting the gravure roll in the case of open gravure systems while the container comprises two longitudinal doctor blades extending from a respective longitudinal edge thereof and contacting the gravure roll in the case of enclosed chamber coating. The coating liquid loaded on the gravure roll is continuously transferred onto the moving film - here OPP film 20 - which either contacts a part of the circumference of the rotating gravure roll or contacts an applicator roll which is in contact with the gravure roll as is the case in Fig. 5.

Fig. 6 shows a top view of gravure roll 34 used in the manufacturing unit of Fig. 5. Gravure roll 34 is conventionally in the form of a roll of circular cross-section. Its circumferential surface is engraved so as to load adhesive and transfer it to the whole surface of OPP film 20 except at the locations of lines 17, 18. Therefore, gravure roll 34 is engraved so that no adhesive is transferred to the OPP film 20 at circumferential lines 41-44 of gravure roll 34 which are dimensioned and spaced from each other so as to provide the two pairs of adhesive-free lines 17, 18 in the web.

The invention has been described with reference to a preferred embodiment. However, many variations are possible within the scope of the invention.

For instance, adhesive-free lines 17, 18 of main wall 11 may be shifted somewhat in a vertical direction with respect to adhesive-free lines 17, 18 of main wall 12 but all meeting a common notch 19 instead of being substantially facing each other, thereby providing a tearing shift between main walls 11, 12 during opening operations. However, the effectiveness of the tear guidance is better in the case of adhesive-free lines of one main wall facing substantially the ones of the other main wall.

The package may be made with other film laminates instead of the OPP/PE type, e.g. OPP/OPP or PET/PE. The package may also be made with three-or more ply laminates instead of a two-ply laminate. In this case, adhesive-free lines may be arranged between each pair of adjacent plies so as to face each other in order to provide maximum weakness for each line of preferential tearing to the laminate. Fig. 7 illustrates the case of a three-ply laminate. Fig. 7 shows an enlarged view of a cut through main wall 11 in the region of lines 17, 18 according to line III-III in Fig. I perpendicular to lines 17, 18. The laminate is made of a first ply 50 bonded by adhesive 51 to a central ply 52 bonded to a third ply 54 by adhesive 53. Two adhesive-free lines 17, 18 are arranged between plies 50, 52 and two further adhesive-free lines 17a, 18a between plies 52, 54. Adhesive-free lines 17a, 18a substantially face respectively adhesive-free lines 17, 18 taking into account positioning tolerance in view of the width of each line. But it is also possible to arrange adhesive-free lines only between one pair of adjacent plies or between several pairs of adjacent plies so as to face each other, but without providing corresponding adhesive-free lines between the other pairs of adjacent plies. In this case, it is preferable to arrange adhesive-free lines in the or those adhesive layers that provide the greatest mechanical strength so as to provide sufficient weakness for guidance of the tear.

The laminate may also comprise one or several plies made of other material than a plastic material, e.g. the laminate may comprise at least one plastic material ply with a paper ply such as a paper/PE laminate. One ply could also be made of a light metal or consist in a metalized plastic ply. In particular, it could be a PP/AI/PET laminate. The laminate may even only be made of plies made of other materials than plastic materials.

Each main wall of the pouch or bag could be provided with more than two parallel adhesive-free lines, e.g. three parallel lines - or even more - having each a width and spaced apart two-by-two by a distance as described above. Each additional adhesive-free line provides the pouch with an additional ability to "catch" the tearing and to guide it when the tear leaves another adhesive-free line during the tearing operations.

On the contrary, it is also possible to provide only one adhesive-free line in each main wall of the pouch or bag. But in this case, notch 19 should be in front or inside of the adhesive-free line in each main wall. Alignment of notch 19 with the adhesive-free lines as well as alignment of the adhesive-free lines with each other can more easily be obtained if the width of the adhesive-free line is at least 3 mm and more preferably equals 5 mm in view of the machine tolerances. The fact of having at least two adhesive-free lines in each main wall allows less precise positioning of notch 19 as it can simply be located at a level between the two lines. It also allows less precise positioning of the adhesive-free lines in one main wall with respect to the ones in the other main wall as the tear will propagate between the adhesive free lines in each main wall despite a shift in the alignment thereof.

It is also possible to arrange at least one adhesive-free line only in one main wall, but it is preferable to arrange at least one adhesive-free line in each main wall because tearing guidance will be provided in both main walls.

The adhesive-free line(s) may be curved or waved instead of being rectilinear e.g. by changing the shape of circumferential lines 41-44 of gravure roll 34. It was however found that rectilinear lines provide better tearing guidance.

The adhesive-free line(s) may extend from one lateral edge to the other lateral edge of the pouch or bag inclusively through the lateral seals. But they may also extend through the whole width of the package without extending into the lateral seals or only in one of them. This may be obtained by interrupting circumferential lines 41-44 in corresponding locations of gravure roll 34. In this case, it is preferable to make use of a notch 19 in one or both lateral seals to help the user to initiate tearing at the correct level. An advantage of this latter embodiment consists in the fact that the upper portion of the pouch or bag which is torn off by the user remains purposefully attached to the pouch or bag. So, the user does not need to find a place to put the top of the bag or pouch as it is the case when fully removed.

The adhesive-free line(s) may also extend from one lateral edge to the top edge, e.g. by giving them a curved line in a corner region of the pouch or bag so as to enable the user to open the package by removing this corner. This is also obtainable by engraving gravure roll 34 accordingly.

The adhesive free line(s) may further extend along lateral seals 15, 16 in addition to extending along top seal 14 in one main wall while the other main wall is not provided with any adhesive-free line. A pull tab may be arranged on the main wall provided with the adhesive-free lines. Thus, a user can open the package by pulling the tab when the pouch lies flat thereby removing a major part of this main wall tearing along the adhesive free lines.

Best guidance is provided in the case where each adhesive-free line is continuously free of adhesive along the whole line of preferential tearing. But alternatively, some spots of the line of preferential tearing may be provided with adhesive while the remainder is adhesive-free. In this case, it is preferable that the length of each spot does not exceed 15 % of the length of the line of preferential tearing and that the total length of the spots does not exceed 50 % of the length of the line of preferential tearing.

The package may be of another type than Doypack® pouches. In particular, the package may be a pillow pouch or a bag with a gusset on each lateral edge for joining the main walls. The package may also be a tray closed with a cover made of a laminate film having adhesive-free lines. In this case, adhesive-free lines may be arranged along two or three edges of the cover with a pull tab arranged on the cover in order to make it possible to open it similarly to the previously-described pouch having a similar arrangement of adhesive-free lines and pull tab.

The lines of preferential tearing may be exclusively provided by the adhesive-free lines as described up to now. This appears to be advantageous as none of the laminate plies are weakened and so there is no risk for a ply of the laminate not fully providing its expected function such as a gas barrier. The effectiveness of the lines of preferential tearing depend upon the mechanical strength provided by the several layers of the laminate with respect to the adhesive(s) layers comprising adhesive-free lines.

Alternatively, the lines of preferential tearing may be provided in the laminate by a combination of weakened lines arranged in one or several plies of the laminate in correspondence to the adhesive-free lines. As an example, a ply of the laminate - preferably an external ply of the laminate - may be provided with grooves - preferably in the outside surface of the ply - made with an ultrasound technique such as described in WO 2004/000532, said grooves facing substantially the adhesive-free lines. As a result, the effectiveness of the lines of preferential tearing is improved.

## Claims

1. A package comprising at least one wall (11; 12) of laminate, said laminate comprising two plies (20, 22) bonded together by an adhesive (21) wherein at least one adhesive-free line (17; 18) is arranged between said two plies.

2. The package according to claim 1, wherein said at least one adhesive-free line extends from a first edge (15) of the package.

3. The package according to claim 2, comprising:
- a seal arranged on said film along said first edge of the package; and
- a notch arranged in said seal
wherein said at least one adhesive-free line extends substantially from said notch.

4. The package according to claim 2 or 3, wherein said at least one adhesive-free line extends from a first edge of the package to a second edge (16) of the package.

5. The package according to any one of claims 1 to 4, wherein said at least one adhesive-free line is rectilinear.

6. The package according to any one of claims 1 to 5, wherein said at least one adhesive-free line has a width (w1; w2) ranging from 1.5 to 5 mm and more preferably from 2 to 4 mm.

7. The package according to any one of claims 1 to 6, wherein:
- the number of lines of said at least one adhesive-free lines is at least two; and
- said at least two adhesive-free lines are parallel and spaced apart by a distance (d) not greater than 10 mm and more preferably ranging from 3 to 5 mm.

8. The package according to claim 7 when depending directly or indirectly on claim 2, comprising:
- a seal arranged on said laminate along said first edge (15) of the package; and
- a notch (19) arranged in said seal
wherein said notch is located on said first edge at a level comprised between said at least two adhesive free lines (17, 18).

9. The package according to any one of claims I to 8, wherein at least one of said plies is made of a plastic material and more preferably each of said plies is made of a plastic material.

10. The package according to any one of claims 1 to 9, wherein one of said two plies is made of PE, the thickness of said PE ply preferably ranging from 20 to 90 microns and more preferably from 50 to 80 microns.

11. The package according to any one of claims 1 to 10, wherein one of said two plies is made of OPP, the thickness of said OPP ply preferably ranging from 15 to 70 microns and more preferably from 15 to 30 microns.

12. The package according to any one of claims 1 to 11, wherein:
- the number of walls of said at least one wall of laminate is at least two;
- two of said at least two walls of laminate form two main walls (11, 12) of a bag; and
- said at least one adhesive-free line in each of said two walls being arranged so as to substantially face each other.

13. The package according to any one of claims 1 to 12, wherein said laminate is flexible.

14. A laminate suitable for making packages, comprising two plies (20, 22) bonded together by an adhesive (21) wherein at least one adhesive-free line (17; 18) is arranged between said two plies.

15. The laminate according to claim 14, wherein said at least one adhesive-free line is rectilinear.

16. The laminate according to claim 14 or 15, wherein said at least one adhesive-free line has a width ranging from 0.5 to 5 mm, more preferably from 2 to 4 mm.

17. The laminate according to any one of claims 14 to 16, wherein:
- the number of lines of said at least one adhesive-free lines is at least two; and
- said at least two adhesive-free lines are parallel and spaced apart by a distance not greater than 10 mm and more preferably ranging from 3 to 5 mm.

18. The laminate according to any one of claims 14 to 17, wherein at least one of said plies is made of a plastic material and more preferably each of said plies is made of a plastic material.

19. The laminate according to any one of claims 14 to 18, wherein one of said two plies is made of PE, the thickness of said PE ply preferably ranging from 20 to 90 microns and more preferably from 50 to 80 microns.

20. The laminate according to any one of claims 14 to 19, wherein one of said two plies is made of OPP, the thickness of said OPP ply preferably ranging from 15 to 70 microns and more preferably from 15 to 30 microns.

21. The laminate according to any one of claims 14 to 20, wherein said at least one adhesive-free line is arranged parallel to a longitudinal edge of the laminate and extends over a whole length of the laminate.

22. The laminate according to any one of claims 14 to 21, wherein the laminate has identical printing regularly repeated over the length of the laminate, each printing corresponding to a package or a set of packages.

23. The laminate according to any one of claims 14 to 22, comprising at least two sets of said at least one adhesive-free line wherein said two sets of at least one adhesive-free line are parallel and spaced apart by a distance of at least 20 mm, the laminate being intended to form two main walls of packages with each main wall comprising a respective one of said two sets of at least one adhesive-free so as to substantially face each other when the two main walls of the packages are joint together by their edges.

24. The laminate according to any one of claims 14 to 23, wherein the laminate is flexible.

25. A method of manufacturing a laminate according to any one of claims 14 to 24, comprising the steps of:
- passing a first web (20) of material in a roll assembly (33) comprising a gravure roll (34) for applying an adhesive (21) on said first web; and
- laminating together said first web and a second web of material (22);
wherein the gravure roll is engraved for preventing application of adhesive on said first web along at least one line (41-44) arranged on the surface of the gravure roll.
